# FASCICULE DE BREVET EUROPEEN

(11) **EP 3 701 144 B1**
(45) Date de publication et mention de la délivrance du brevet: **22.05.2024**
(21) Numéro de dépôt: 18803872.3
(22) Date de dépôt: 24.10.2018
(51) Int. Cl.: F03D 9/25, F03D 1/04, H02K 19/16, H02K 7/18

(54) **AÉROGÉNÉRATEUR**
WINDGENERATOR
AEROGENERATOR

(30) Priorité: 24.10.2017 FR 1760007
(43) Date de publication de la demande: 02.09.2020
(73) Titulaire: Euve, Guy, Mohammedia 28810 (MA)
(72) Inventeur: Euve, Guy, Mohammedia 28810 (MA)
(74) Mandataire: Hautier IP - MC/EP
(86) Numéro de dépôt international: PCT/EP2018/079211
(87) Numéro de publication internationale: WO 2019/081606

(56) Documents cités:
- WO-A2-2010/062788
- DE-A1- 3 638 129
- DE-U1- 20 203 119
- US-A- 1 352 960
- US-A- 3 588 559
- US-A1- 2011 031 763

## Description

### DOMAINE TECHNIQUE DE L'INVENTION

L'invention concerne le domaine des dispositifs pour convertir l'énergie du vent en énergie électrique, tels qu'une éolienne couplée à un générateur électrique. Une éolienne est un dispositif qui convertit l'énergie cinétique du vent en énergie mécanique, le plus souvent à l'aide d'une hélice pourvue d'ailes ou de pales s'étendant depuis un moyeu de l'hélice. Un générateur électrique est ici un dispositif qui convertit l'énergie mécanique générée par l'éolienne en énergie électrique. L'ensemble comprenant une éolienne couplée à un générateur électrique pour produire de l'électricité à partir de l'énergie du vent est appelé un aérogénérateur. Ce type de dispositifs permet de produire de l'électricité à partir d'une source d'énergie renouvelable (l'énergie cinétique du vent), sans émission de gaz à effet de serre. L'aérogénérateur selon l'invention est avantageusement adapté à tout type d'éolienne, qu'elle soit notamment à axe vertical ou à axe horizontal.

### ETAT DE LA TECHNIQUE

Une éolienne présente habituellement une hélice montée libre en rotation sur un mât fixe. L'hélice comprend un axe de rotation depuis lequel s'étendent les pales. L'axe de rotation peut avantageusement être vertical. Cela permet, lorsque l'éolienne est dans une tour à vente de réduire d'améliorer le rendement. Cette amélioration de rendement ce fait notamment avec un équilibrage pour réduire les frottements de contact et en dirigeant spécifiquement le vent sur l'éolienne. Les pâles sont agencées pour entrainer l'axe en rotation sous l'action du vent. L'axe est agencé conjointement avec un générateur électrique pour convertir l'énergie mécanique liée à la rotation de l'axe en énergie électrique.

Afin d'optimiser la production d'énergie électrique, plusieurs types de générateurs électriques ont été développés, parmi lesquels l'un des plus utilisés est une machine asynchrone, connue également sous le terme de machine à induction, dite 'à cage d'écureuil'.

Dans ce type de générateur électrique, l'axe de l'hélice porte un rotor placé au centre d'un stator monté fixe sur le mât de l'éolienne. Le rotor est muni de barreaux en cuivre et en aluminium et le stator comprend des bobines (ou 'self' selon la terminologie anglo-saxonne) à proximité desquelles les barreaux du rotor passent successivement lorsque le rotor tourne, de manière à perturber par induction le champ électromagnétique généré par chaque bobine lorsqu'elle est parcourue par un courant électrique. Les extrémités de chaque bobine du stator peuvent être raccordées à des phases d'un réseau électrique pour y injecter l'énergie électrique produite par le générateur.

Dans un aérogénérateur, ce type de générateur nécessite d'utiliser un multiplicateur, par exemple à engrenages, destiné à transformer la faible vitesse de rotation de l'axe de l'éolienne en une vitesse de rotation plus grande du rotor. En effet, si le rotor était directement relié à l'éolienne, la vitesse de rotation de ce dernier serait égale à celle de l'axe et serait donc souvent insuffisante pour produire une énergie électrique significative. Le multiplicateur permet donc de résoudre l'incompatibilité entre le nombre de tours/mn des pales de l'éolienne qui est généralement faible et le nombre de tours/mn du rotor du générateur qui doit être important pour produire une puissance électrique (exprimée en Watts) significative.

Toutefois, la nécessité d'utiliser un multiplicateur est à l'origine de certaines limitations. Notamment, il est sujet à usure, il induit une dissipation d'énergie par frottements qui résulte en des pertes importantes de rendement, il est d'un coût de revient élevé et il nécessite une maintenance ayant un coût non négligeable, ce qui limite le rendement global de l'aérogénérateur.

Pour augmenter le rendement global de l'aérogénérateur avec multiplicateur, une solution consiste à augmenter le nombre de bobines du stator. Toutefois, cette solution augmente d'autant le couple de démarrage du générateur. Cet inconvénient est également présenté par les solutions reposant sur la disposition d'aimants permanents en périphérie du rotor. Un tel aérogénérateur est par exemple connu des documents US1352960 et DE20203119U1. Ce dernier type d'aérogénérateur présente en outre des inconvénients liés à l'absence de variabilité du champ magnétique généré par un aimant permanent, à l'impossibilité de débrayer l'aimant permanent et à l'impossibilité d'adapter le champ magnétique généré par l'aimant permanent à un changement de vitesse de rotation des pales de l'hélice.

Il existe donc un besoin de proposer un aérogénérateur permettant de pallier un ou plusieurs des inconvénients susmentionnés. Il existe notamment un besoin de proposer un aérogénérateur présentant un rendement amélioré. Un autre objet de l'invention est de proposer un aérogénérateur ne nécessitant pas l'emploi d'un multiplicateur et présentant un bon rendement énergétique, tout en étant robuste et peu coûteux.

### RÉSUMÉ DE L'INVENTION

Pour atteindre cet objectif, un premier aspect de la présente invention concerne un aérogénérateur comprenant :
- une structure fixe,
- une éolienne comprenant une hélice pourvue d'au moins deux pales et un axe s'étendant depuis un moyeu de l'hélice et monté libre en rotation sur la structure fixe, pour convertir l'énergie éolienne en énergie mécanique, et
- un générateur électrique comprenant un rotor solidaire de l'éolienne et un stator solidaire de la structure fixe pour convertir l'énergie mécanique générée par l'éolienne en énergie électrique.

Le rotor du générateur électrique peut être fixé sur l'hélice, plus particulièrement sur au moins une pale de l'hélice et de préférence à l'extrémité d'au moins une pale de l'hélice, de sorte à être à distance de l'axe de l'éolienne.

Le rotor peut plus particulièrement comprendre au moins un élément à base d'un matériau conducteur. Par ailleurs, le stator peut comprendre au moins une bobine fixée sur la structure fixe. De la sorte, chaque élément peut passer à proximité de chaque bobine à chaque rotation d'un tour complet de l'éolienne autour de son axe.

De préférence, ladite au moins une bobine comprend au moins une paire de bobines, chaque paire de bobines comprenant :
- une bobine primaire destinée à être reliée à une source d'énergie électrique de sorte que la bobine primaire génère un champ magnétique lorsqu'elle est parcourue par un courant électrique fourni par la source d'énergie électrique, et
- une bobine secondaire destinée à être reliée à un réseau de distribution d'énergie électrique de sorte à injecter dans ledit réseau un courant électrique issu de la bobine secondaire et généré par perturbations du champ magnétique généré par la bobine primaire du fait des passages des éléments à base de matériau conducteur lorsque le rotor tourne.

Le rotor est ainsi agencé à distance de l'axe de l'éolienne, de sorte que la vitesse de rotation du rotor augmente à mesure que cette distance augmente, pour une même vitesse de rotation de l'éolienne. On obtient ainsi un effet technique comparable à celui recherché en utilisant un multiplicateur, sans toutefois présenter les inconvénients liés à l'utilisation d'un multiplicateur. L'aérogénérateur est ainsi simple et facile à mettre en oeuvre. Son coût de revient est faible en comparaison avec le coût d'un ensemble aérogénérateur/multiplicateur existant. L'aérogénérateur présente ainsi une grande capacité d'adaptation en fonction de l'envergure des pales de l'hélice.

De plus, l'aérogénérateur tel qu'introduit ci-dessus est fonctionnel y compris, et de préférence, lorsque ledit au moins un élément à base d'un matériau conducteur n'est pas un aimant permanent. Dans ce cas, l'aérogénérateur permet avantageusement d'éviter et de résoudre les inconvénients liés à l'utilisation d'un ou plusieurs aimants permanents. Parmi ces inconvénients, l'on peut citer la création d'un couple électromagnétique de démarrage et l'absence de variabilité du champ magnétique. De plus, l'impossibilité de débrayer l'aimant permanent ne permet pas d'adapter le champ magnétique à un changement de vitesse de rotation des pales de l'hélice.

De préférence, le rotor est fixé à l'extrémité d'au moins une pâle.

Un deuxième aspect de la présente invention concerne un kit comprenant :
- une éolienne comprenant une hélice pourvue d'au moins deux pales et un axe destiné à s'étendre depuis un moyeu de l'hélice, et
- un générateur électrique comprenant un rotor destiné à être solidarisé avec l'éolienne et un stator pour convertir une énergie mécanique générée par l'éolienne en énergie électrique,
le stator et l'éolienne étant propres et destinés à être solidarisés à une structure fixe, l'axe de l'éolienne étant monté libre en rotation sur la structure fixe pour convertir l'énergie éolienne en énergie mécanique,

Le rotor du générateur électrique est destiné à être fixé sur l'hélice de sorte à être à distance de l'axe de l'éolienne, et est plus particulièrement fixé sur au moins une pale de l'hélice, pour constituer un aérogénérateur tel qu'introduit ci-dessus lorsque le kit est assemblé.

De préférence, le rotor comprend au moins un élément à base d'un matériau conducteur et le stator comprend au moins une bobine fixée sur la structure fixe, de sorte que chaque élément passe à proximité de chaque bobine à chaque rotation d'un tour complet de l'éolienne autour de son axe, ladite au moins une bobine comprenant au moins une paire de bobines, chaque paire de bobines comprenant :
- une bobine primaire destinée à être reliée à une source d'énergie électrique, et
- une bobine secondaire destinée à être reliée à un réseau de distribution d'énergie électrique.

Un troisième aspect de la présente invention concerne une tour éolienne comprenant un aérogénérateur tel qu'introduit ci-dessus.

### BRÈVE DESCRIPTION DES FIGURES

Les buts, objets, ainsi que les caractéristiques et avantages de l'invention ressortiront mieux de la description détaillée d'un mode de réalisation de cette dernière qui est illustré par les dessins d'accompagnement suivants dans lesquels :

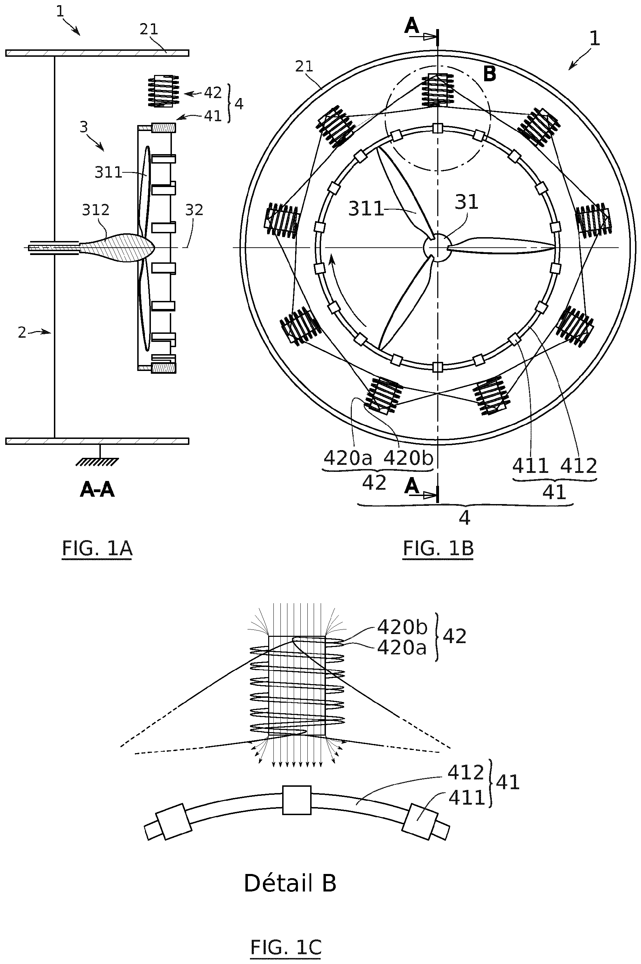

- la figure 1B illustre une vue de face de l'aérogénérateur selon un premier mode de réalisation de l'invention ;
- la figure 1A est une vue en coupe selon la plan A-A de l'aérogénérateur illustré sur la figure 1B ;
- la figure 1C est un agrandissement d'une partie B de la figure 1B sur laquelle des lignes de champ magnétique ont été représentées ;
- la figure 2 illustre un schéma de principe d'une électronique de contrôle de l'aérogénérateur selon le premier aspect de l'invention ;
- la figure 3A illustre une vue de face de l'aérogénérateur selon un deuxième mode de réalisation de l'invention ;
- la figure 3B illustre une vue de face de l'aérogénérateur selon un troisième mode de réalisation de l'invention ;
- la figure 4 illustre une vue partielle en coupe d'une tour éolienne selon le troisième aspect de l'invention dans laquelle est représentée une vue partielle de profil de l'aérogénérateur selon le premier aspect de l'invention ; et
- la figure 5 est une vue en perspective de l'aérogénérateur illustré sur la figure 3A.

Les dessins joints sont donnés à titre d'exemples et ne sont pas limitatifs de l'invention. Ces dessins sont des représentations schématiques et ne sont pas nécessairement à l'échelle de l'application pratique.

### DESCRIPTION DÉTAILLÉE DE L'INVENTION

Avant d'entamer une revue détaillée de modes de réalisation de l'invention, sont énoncées ci-après des caractéristiques optionnelles qui peuvent éventuellement être utilisées en association ou alternativement :
- ledit au moins un élément peut s'étendre sensiblement parallèlement à l'axe de l'éolienne. Cette disposition des éléments permet d'empêcher la rupture du champ magnétique, voire la percussion des éléments sur le stator, du fait de la variation de la flèche des pales par vents forts ;
- le matériau conducteur à base duquel au moins un élément est réalisé peut comprendre un acier doux, de préférence à faible teneur en carbone ;
- chaque élément peut présenter une forme de plaque présentant des dimensions de 10 à 50 mm, de préférence égale à 30 mm, en longueur, de 5 à 20 mm, de préférence égale à 10 mm, en largeur, et de 0,1 à 2 mm, de préférence égale à 0,5 mm, en épaisseur ;
- le rotor peut comprendre en outre un support annulaire fixé sur au moins une pale de l'hélice de façon concentrique avec le moyeu de l'hélice, ledit au moins un élément étant fixé au support annulaire. L'aérogénérateur peut ainsi comprendre un nombre d'éléments supérieur au nombre de pales de l'hélice dans la mesure où les éléments sont ancrés sur le support annulaire. Ceci permet premièrement de compenser une rotation lente de l'hélice qui serait due à un vent faible, et d'optimiser ainsi les performances de l'aérogénérateur dans ce cas, et deuxièmement de consolider mécaniquement les pales entre elles lorsque le support annulaire est fixé à chacune des pales. Plus particulièrement, l'hélice peut présenter une envergure comprise entre 40 et 100 cm, de préférence égale à 60 cm, et supporte entre 10 et 80, de préférence entre 40 et 50, éléments, les éléments étant par exemple répartis à intervalle régulier sur le support annulaire ;
- le stator peut comprendre un ensemble de trois paires de bobines identiques entre elles qui sont par exemple réparties en une symétrie de rotation par rapport à l'axe de l'éolienne. Chaque bobine secondaire est destinée à être reliée au réseau de distribution d'énergie électrique via un contacteur électrique configuré pour s'ouvrir lorsque l'éolienne tourne à une vitesse supérieure à une première valeur seuil. Chaque bobine secondaire peut ainsi être déconnectée pour neutraliser le champ magnétique par débrayage électrique en situation de vents forts limites ou extrêmes entraînant une rotation de l'éolienne à une vitesse susceptible d'induire un endommagement de l'aérogénérateur. Chaque bobine primaire peut par ailleurs être destinée à être reliée à la source d'énergie électrique via un contacteur électrique configuré pour s'ouvrir lorsque l'éolienne tourne à une vitesse supérieure à une deuxième valeur seuil. Chaque bobine primaire peut ainsi être déconnectée lorsque la vitesse de rotation de l'éolienne est supérieure à une deuxième valeur seuil définie comme suffisante pour la production d'une énergie électrique significative par les bobines secondaires ;
- l'aérogénérateur peut comprendre au moins deux, de préférence trois, ou plus de trois, ensembles de paires de bobines, chaque ensemble comprenant au moins une paire, de préférence trois paires, ou plus de trois paires, de bobines, et chaque bobine secondaire d'une paire de bobines d'un ensemble présentant une surface et une section différentes de celles de chaque bobine secondaire de chaque paire de bobines de chacun des autres ensembles. L'aérogénérateur peut comprendre en outre un régulateur électronique configurer pour successivement embrayer et débrayer tout ou partie de chaque ensemble de paires de bobines en fonction d'un paramètre relatif à l'énergie éolienne à convertir, par exemple en fonction de la vitesse de rotation de l'éolienne. De tels ensembles de dimensionnement croissant permettent à l'aérogénérateur selon le premier aspect de l'invention d'élargir et d'optimiser le champ de génération de puissance des vents faibles à très faibles jusqu'aux vents forts à très forts ;
- la structure fixe peut comprendre un carénage de l'hélice pouvant prendre la forme d'un diffuseur, le stator étant le cas échéant fixé au carénage. A comparer aux hélices non carénées, une telle hélice carénée permet, en plus de constituer un élément de sécurité, d'augmenter le rendement de l'aérogénérateur, en particulier lorsque le carénage prend la forme d'un diffuseur ;
- l'aérogénérateur peut comprendre au moins un hauban, chaque hauban étant configuré entre l'axe de l'éolienne et une pale de l'hélice pour la maintenir dans une position sensiblement perpendiculaire à l'axe de l'éolienne. La variation de la flèche des pales par vents faibles à forts peut ainsi être neutralisée ;
- l'aérogénérateur peut comprendre trois paires de bobines primaire et secondaire configurées de sorte l'aérogénérateur produise les trois phases d'un courant triphasé ; et
- l'axe de rotation de l'éolienne peut être vertical.

La présente invention trouve pour domaine préférentiel d'application les tours éoliennes de petite et moyenne tailles, en particulier celles à usage domestique. Toutefois, la présente invention est également propre à être mise en oeuvre dans des tours éoliennes de grande taille, telles qu'une éolienne offshore.

En référence aux figures 1A à 1C, un premier aspect de l'invention concerne un aérogénérateur 1 particulièrement destiné à équiper une tour éolienne. L'aérogénérateur 1 comprend une structure fixe 2, une éolienne 3 pour convertir l'énergie éolienne en énergie mécanique et un générateur électrique 4 pour convertir l'énergie mécanique générée par l'éolienne 3 en énergie électrique.

L'éolienne 3 comprend une hélice 31, pourvue d'au moins deux pales 311, de préférence de trois pales 311, et un axe 32. Le nombre de pales 311, au minimum de deux, sera fonction des conditions de vents et des performances souhaitées sur un site donné. L'axe 32 est solidaire de l'hélice 31 et s'étend par une première extrémité depuis un moyeu 312 de celle-ci. Par une seconde extrémité, l'axe 32 est monté libre en rotation sur la structure fixe 2.

Le générateur électrique 4 comprend un rotor 41 solidaire de l'éolienne 3 et un stator 42 solidaire de la structure fixe 2. Eventuellement, l'axe 32 de l'éolienne 3 et le stator 42 ne sont pas solidaires d'une même partie de la structure fixe 2, mais sont solidaires de parties différentes, mais solidaires entre elles, de la structure fixe 2.

Comme particulièrement illustré sur la figure 1C, le rotor 41 du générateur électrique 4 est fixé au moins en partie sur au moins une pale 311 de l'hélice 31. Cette fixation peut être directe ou indirecte ; dans le deuxième cas elle fait intervenir un élément de fixation intermédiaire entre le rotor 41 et l'hélice 31.

Plus particulièrement, le rotor 41 comprend au moins un élément 411 à base d'un matériau conducteur fixé sur au moins une pale 311 de l'hélice 31. De préférence, chaque pale 311 de l'hélice 31 supporte au moins un élément 411 du rotor, chaque élément étant de préférence distant du moyeu 312 de l'hélice d'une même distance, de façon à ce que les éléments 411 soient distribués selon un cercle concentrique avec le moyeu 312 de l'hélice 31 et donc avec l'axe 32 de l'éolienne 3.

Le matériau conducteur à base duquel au moins un élément 411 est réalisé comprend un acier doux, de préférence à faible teneur en carbone, par exemple de type A40. En alternative, les éléments 411 sont en cuivre, en aluminium ou autres métaux conducteurs. En outre, le cas échéant, les éléments 411 peuvent être aimantés. Au moins certains d'entre eux peuvent être reliés électriquement entre eux. Cette liaison électrique est réalisée de préférence, mais pas nécessairement, par un anneau métallique, par exemple en aluminium, les joignant ensemble. Ce rôle de liaison électrique peut par exemple être joué par le support annulaire 412 susmentionné et détaillé plus bas.

Chaque élément 411 peut présenter une forme de plaque présentant des dimensions de 10 à 50 mm, de préférence égale à 30 mm, en longueur, de 5 à 20 mm, de préférence égale à 10 mm, en largeur, et de 0,1 à 2 mm, de préférence égale à 0,5 mm, en épaisseur. Ces dimensions sont données à titre d'exemple indicatif et non-limitatif. En outre, d'autres formes sont envisageables telles qu'une forme de barreau ou une forme tronconique ou une forme de section ovoïdale. Toutefois, la forme des éléments 411 présente de préférence une dimension en longueur supérieure à ses autres dimensions.

Selon un mode de réalisation préféré, chaque élément 411 est fixé à l'extrémité distale d'une pale 311 de l'hélice 31. Cependant, ce mode de réalisation préféré n'est pas limitatif ; par exemple, chaque élément 411 peut être fixé à mi-distance entre le moyeu 312 et l'extrémité distale d'une pale 311 de l'hélice 31 ; par un autre exemple, deux éléments 411 du rotor 41 peuvent être fixés à chaque pale à des distances différentes du moyeu 312 de l'hélice 31. L'aérogénérateur 1 présente une grande capacité d'adaptation, et notamment d'adaptation en continu, en fonction de l'envergure des pales 311 de l'hélice 31. L'hélice 31 peut présenter une envergure comprise entre 40 et 100 cm ; elle est de préférence sensiblement égale à 60 cm. Une hélice 31 d'une telle envergure est particulièrement bien adaptée à une tour éolienne à usage domestique. Cependant, l'aérogénérateur 1 selon l'invention n'est nullement limité à une application dans une tour éolienne ; au contraire, il est adapté également à des éoliennes à axe horizontal et à des éoliennes présentant une hélice d'une envergure allant jusque 5 m, voire plus.

Le rotor 41 est ainsi agencé à distance de l'axe 32 de l'éolienne 3. De la sorte, la vitesse du rotor 41 augmente à mesure que cette distance augmente, pour une même vitesse de rotation de l'éolienne 3. On obtient ainsi un effet technique comparable à celui recherché en utilisant un multiplicateur, sans toutefois présenter les inconvénients liés à l'utilisation d'un multiplicateur. En effet, l'effet technique obtenu l'est sans donner lieu à usure, puisqu'il n'induit plus des engrenages d'un multiplicateur. Pour cette même raison, l'effet technique obtenu l'est sans dissipation d'énergie par frottements et donc sans perte de rendement. L'effet technique obtenu l'est avec un coût de revient bas par rapport au coût de revient d'un multiplicateur. En outre, l'effet technique obtenu l'est sans nécessiter une maintenance aussi lourde que celle nécessité par l'utilisation d'un multiplicateur. Pour ces différentes raisons, le rendement global de l'aérogénérateur 1 selon le premier aspect de l'invention est d'ores et déjà grandement amélioré vis-à-vis d'un aérogénérateur mettant en oeuvre un multiplicateur standard. Cette amélioration est d'autant plus appréciable sur des éoliennes de petite ou moyenne envergure.

Le stator 42 quant à lui peut comprendre au moins une bobine 420a, 420b fixée sur la structure fixe 2. Ladite au moins une bobine 420a, 420b est agencée sur la structure fixe 2 de sorte que chaque élément 411 passe à proximité de chaque bobine 420a, 420b à chaque rotation d'un tour complet de l'éolienne 3 autour de son axe 32. Chaque bobine du stator 42 peut être réalisée par enroulement d'un fil de cuivre, d'aluminium ou d'un autre métal conducteur.

Plus particulièrement, selon le premier mode de réalisation de l'aérogénérateur 1 illustré sur les figures 1A à 1C, chaque bobine 420a, 420b comporte un axe qui est agencé radialement par rapport à l'étendue généralement circulaire de l'hélice 31. De la sorte, chaque élément 411 passe à proximité d'une extrémité de chaque bobine 420a, 420b à chaque rotation d'un tour complet de l'éolienne 3 autour de son axe 32.

Plus particulièrement, le stator 42 comprend au moins une paire de bobines dont une bobine primaire 420a et une bobine secondaire 420b.

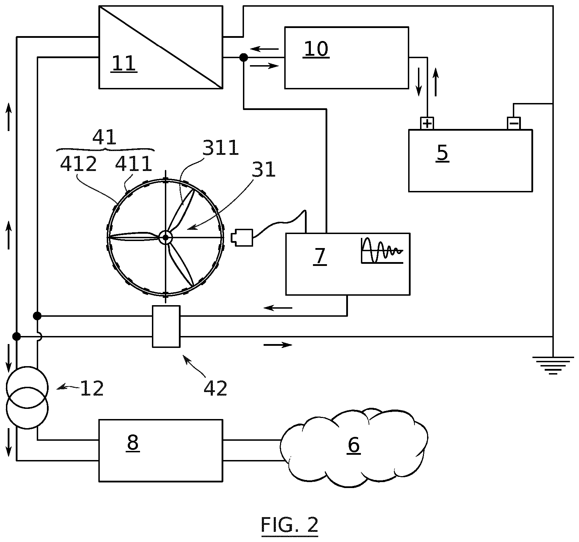

En référence à la figure 2, la bobine primaire 420a de chaque paire est destinée à être reliée à une source d'énergie électrique 5. La bobine secondaire 420b de chaque paire est destinée à être reliée à un réseau de distribution 6 d'énergie électrique.

Le rôle de chaque bobine primaire 420a est avant tout de générer un champ magnétique lorsqu'un courant électrique la parcourt qui est fourni par la source d'énergie électrique 5. Ledit champ magnétique est illustré sur la figure 1C sous forme de lignes de champ. Des plaques, par exemple en fer, peuvent être agencées comme représenté sur les figures 1A à 1C au centre et selon l'axe de chaque bobine primaire 420a pour jouer le rôle de circuit magnétique permettant de canaliser le champ magnétique et d'en limiter les pertes. Les bobines primaires 420a peuvent être connectées électriquement entre elles par liaisons filaires comme illustré sur la figure 1B. Il est à noter que, en alternative, chaque bobine primaire 420a peut être remplacée par un aimant permanent, mais cela comporte plusieurs inconvénients, en particulier en ce qui concerne la création d'un couple électromagnétique de démarrage, l'absence de variabilité du champ magnétique généré par un aimant permanent, l'impossibilité de débrayer l'aimant permanent et d'adapter le champ magnétique à un changement de vitesse de rotation des pales 311 de l'hélice 31. En opposition, l'utilisation d'une bobine primaire 420a offre des avantages correspondants. Elle permet de générer un champ magnétique primaire variable en fonction de l'alimentation en électricité qu'elle reçoit de la source d'énergie électrique. En référence à la figure 2, la variabilité du champ magnétique primaire peut être obtenue et contrôlée par un régulateur inverseur de sens 10 et/ou par une électronique de contrôle comprenant par exemple un premier régulateur électronique 7 du courant d'alimentation de la bobine primaire en fonction d'au moins l'une parmi l'accélération, la vitesse et la décélération de l'hélice 31. Ces paramètres peuvent être mesurés par un capteur 9 *ad hoc* tel qu'illustré sur la figure 2 agencé relativement au rotor 41 et relié fonctionnellement, par exemple par liaison filaire, au premier régulateur électronique 7. L'aérogénérateur 1 permet ainsi, à l'aide de l'électronique, une autorégulation en fonction de la variation de la vitesse du vent exprimée en nombre de tours de l'éolienne 3 par unité de temps. Au besoin, le champ magnétique primaire peut être contrôlé de sorte à permettre de vaincre le moment d'inertie de l'hélice 31 et amorcer sa rotation par vents faibles. Par ailleurs, une fois la rotation de l'hélice 31 enclenchée, chaque bobine primaire 420a, ou du moins certaines d'entre elles, peut être déconnectée par un contacteur de démarrage par exemple compris et contrôlé par le premier régulateur électronique 7. La possibilité de débrayer les bobines primaires 420a permet de neutraliser le champ magnétique en situation de vents forts limites ou extrêmes, pour des raisons de sécurité. En outre, un premier redresseur 11 peut être prévu pour convertir un courant continu de la source d'énergie électrique 5 en courant alternatif.

Le rôle de chaque bobine secondaire 420b est de générer un courant électrique du fait de la variation du champ magnétique induite par les passages successifs des éléments 411 du rotor 41 à proximité de l'extrémité de la bobine primaire 420a de la même paire lorsque l'hélice 31 tourne. Les bobines secondaires 420b peuvent être connectées électriquement entre elles par liaisons filaires comme illustré sur la figure 1B.

La combinaison des bobines primaire et secondaire de chaque paire permet, à l'aide de l'électronique, de réguler et d'optimiser le rendement de l'aérogénérateur 1.

En référence à la figure 2, le courant électrique généré par chaque bobine secondaire 420b est destiné à être injecté, éventuellement après traitement, dans le réseau de distribution électrique 6. Ledit traitement est par exemple réalisé au moins en partie par un second régulateur de courant 8 en fonction de l'un au moins parmi la nature, de l'intensité, la tension et la puissance du courant électrique généré par les bobines secondaires 420b. Le traitement du courant électrique généré dans les bobines secondaires 420b peut en outre faire intervenir un second redresseur 12. Chaque bobine secondaire 420b est destinée à être reliée au réseau de distribution (6) d'énergie électrique via un contacteur électrique par exemple compris et contrôlé par le second régulateur électronique 8 et configuré pour s'ouvrir lorsque l'éolienne 3 tourne à une vitesse supérieure à une première valeur seuil prédéterminée, pour permettre de débrayer l'aérogénérateur 1 en situation de vents forts limites ou extrêmes, pour des raisons de sécurité.

Selon le premier mode de réalisation illustré sur les figures 1A à 1C, la bobine secondaire 420b est agencée concentriquement à la bobine primaire 420a. Les bobines 420a et 420b peuvent être imbriquées l'une dans l'autre, potentiellement en présentant un même diamètre, sans pour autant se contacter l'une l'autre. Elles sont isolées électriquement l'une de l'autre.

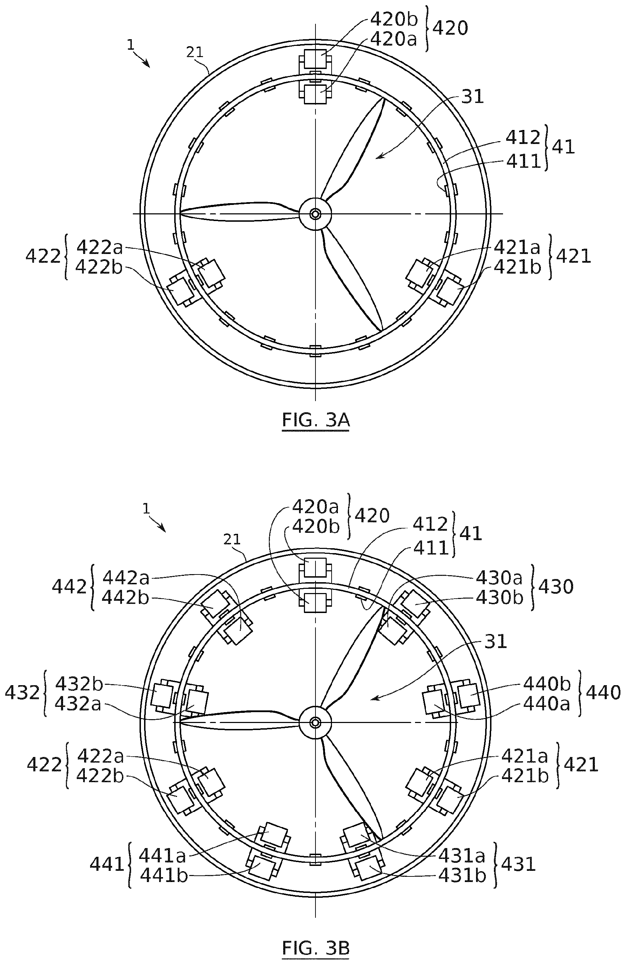

Notons ici que comme illustré sur les figures 3A et 3B, les aérogénérateurs 1 selon les deuxième et troisième modes de réalisation de l'invention comprennent des paires 420, 421, 422, 430, 431, 432, 440, 441, 442 de bobines dont chaque bobine est agencée tangentiellement à l'étendue circulaire de l'hélice 31. Selon les exemples illustrés, les bobines primaires de ces paires de bobines sont agencés plus près du moyeu 312 de l'hélice 31 que les bobines secondaires, mais une configuration inverse est tout à fait fonctionnelle. Chaque bobine primaire 420a, 421a, 422a, 430a, 431a, 432a, 440a, 441a, 442a, ainsi que chaque bobine secondaire 420b, 421b, 422b, 430b, 431b, 432b, 440b, 441b, 442b, peut également être agencée conjointement avec un circuit magnétique centré pour l'essentiel par rapport à la bobine. Le circuit magnétique d'une bobine primaire est alors en outre potentiellement courbé pour faire face par ses extrémités aux extrémités du circuit magnétique de la bobine secondaire correspondante, de sorte à former un circuit magnétique fermé, les circuits magnétiques restant toutefois distants l'un de l'autre pour autoriser les passages successifs des éléments 411 du rotor 41 entre les bobines primaire et secondaire de chaque paire 420, 421, 422, 430, 431, 432, 440, 441, 442.

Chacun des circuits magnétiques susmentionnés peut être réalisé à base d'un matériau conducteur tel qu'un acier doux, de préférence à faible teneur en carbone, par exemple de type A40. En alternative, ils sont réalisés en cuivre, en aluminium ou en un autre métal conducteur.

De préférence, le stator 42 comprend un ensemble de trois paires 420, 421, 422 de bobines identiques entre elles qui sont par exemple réparties en une symétrie de rotation par rapport à l'axe 32 de l'éolienne 3. De la sorte, l'aérogénérateur permet de produire les trois phases d'un courant triphasé, présentant par exemple une fréquence de 50 ou 60 Hz et une tension efficace de 230 ou 380 V. Au besoin, il est possible de convertir ce courant triphasé en courant continu, par exemple d'une tension de 12 ou 24 V, par le biais du second redresseur 12.

La nécessaire importance du diamètre de l'hélice 31, en recherche de couple, est exploitée par la possibilité d'augmenter fortement le nombre de bobines 420a, 420b, 421a, 421b, 422a et 422b sur le stator 42 sans subir les inconvénients du couple de résistance électromagnétique des aérogénérateurs existants. La possibilité d'augmenter le nombre de bobines permet de diminuer la vitesse de l'hélice 31 tout en bénéficiant d'une grande vitesse circulaire des éléments 411 du rotor 41 nécessaire à la production d'énergie électrique, cette grande vitesse circulaire étant elle-même acquise par l'importance du diamètre de l'éolienne. Pour autant, des essais sur une petite éolienne 3 ont permis de limiter à trois le nombre de bobines primaire/secondaire. Toutefois, comme décrit plus bas, d'autres ensembles de trois bobines pourront être ajoutés pour capter les vents plus forts à beaucoup plus forts.

D'autres caractéristiques particulières de l'aérogénérateur 1 selon le premier aspect de l'invention sont décrites ci-dessous qui permettent d'augmenter encore le rendement de l'aérogénérateur 1.

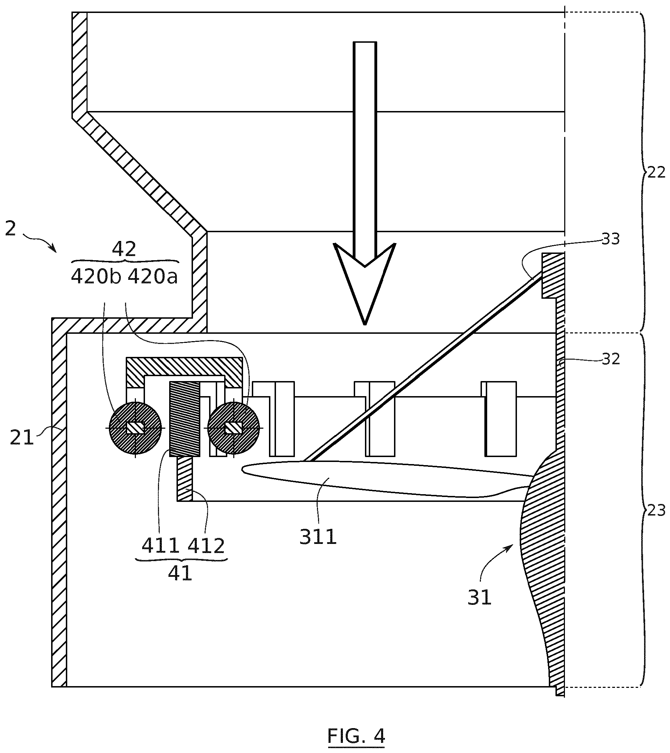

Selon une première de ces caractéristiques, de façon adaptée à chaque mode de réalisation envisagé et comme particulièrement illustré sur la figure 4, chaque élément 411 peut s'étendre sensiblement parallèlement à l'axe 32 de l'éolienne 3, depuis les pales 311 de l'hélice 31. Cette disposition des éléments 411 permet d'empêcher la rupture du champ magnétique, voire la percussion des éléments 411 sur le stator 42, et plus particulièrement contre les bobines 420a, 420b du stator 42, du fait du ploiement des pales 311 de l'hélice 31, ou équivalemment de la variation de la flèche des pales 311 de l'hélice 31, par vents forts.

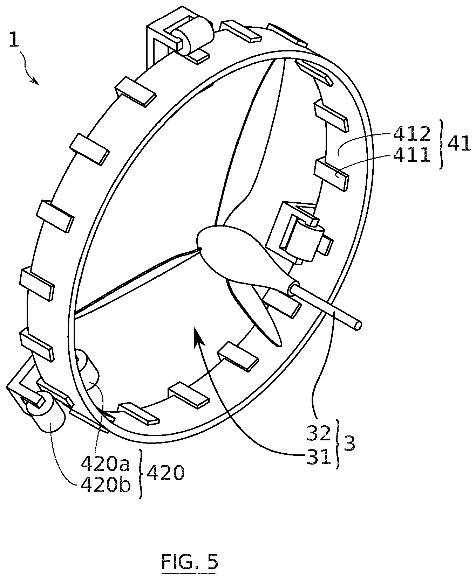

Comme déjà mentionné plus haut, de façon adaptée à chaque mode de réalisation envisagé et comme illustré en particulier sur les figures 1A à 1C et les figures 3A, 3B et 5, le rotor 41 peut comprendre en outre un support annulaire 412. Le support annulaire 412 est de préférence fixé à être de toute part à égale distance de l'axe 32 de l'éolienne 3, de façon concentrique avec le moyeu 312 de l'hélice 31. Par exemple, le support annulaire 412 est fixé sur au moins une pale 311 de l'hélice 31, de préférence sur chaque pale 311 de l'hélice 31. Les éléments 411 du rotor 41 sont fixés au support annulaire 412. De la sorte, l'hélice 31, présentant une envergure comprise entre 40 et 100 cm, peut supporter entre 10 et 80, de préférence entre 40 et 50, éléments 411. Ces éléments 411 sont par exemple répartis à intervalle régulier sur le support annulaire 412. L'aérogénérateur 1 peut ainsi comprendre un nombre d'éléments bien supérieur au nombre de pales 311 de l'hélice 31 dans la mesure où les éléments 411 sont ancrés sur le support annulaire 412. Ceci permet premièrement de compenser une rotation lente de l'hélice 31 qui serait due à un vent faible, et d'optimiser ainsi les performances de l'aérogénérateur 1 dans ce cas, et deuxièmement de consolider mécaniquement les pales 311 de l'hélice 31 entre elles lorsque le support annulaire 412 est fixé à chacune des pales 311. En effet, dans le cas de vents faibles et en conséquence d'une lente rotation du rotor 41, la vitesse circulaire constatée à l'extrémité des pales 311, le nombre élevé d'éléments 411 et le cas échéant de bobines 420a, 420b ont pour effet de compenser la lente rotation du rotor 41 et d'augmenter significativement les performances en comparaison des aérogénérateurs existants. Par ailleurs, des essais ont permis de constater que plus le diamètre de l'hélice 31, et donc du rotor 41, est grand, plus le nombre d'éléments 411 requis est petit car la vitesse circulaire de chaque élément 411 est d'autant augmentée. Le nombre d'éléments 411 requis est donc inversement proportionnel au diamètre de l'hélice 31 et en particulier du rotor 41.

L'augmentation du nombre d'éléments est réalisée dans l'aérogénérateur 1 selon le premier aspect de l'invention sans créer de résistance de couple électromagnétique au démarrage, ce dernier pouvant en outre être modulé et maitrisé par une gestion électronique. Le diamètre important du rotor 41 devient un avantage, à l'inverse des aérogénérateurs existants, surtout dans les petites à moyennes éoliennes, qui nécessite un multiplicateur, source de perte de rendement et d'obligation de maintenance. Les pales 311 de l'hélice 31 ont une double fonction « force/couple » et « rotor ».

Selon le troisième mode de réalisation de l'aérogénérateur 1, et en référence à la figure 3B, l'aérogénérateur 1 peut comprendre au moins deux, de préférence trois, ensembles de paires 420, 421, 422, 430, 431, 432, 440, 441, 442 de bobines. Chaque ensemble comprend au moins une paire, de préférence trois paires, de bobines. Chaque bobine secondaire 420b, 421b, 422b ; 430b, 431b, 432b ; 440b, 441b, 442b d'une paire de bobines d'un ensemble peut présenter une surface et une section différentes de celles de chaque bobine secondaire de chaque paire de bobines de chacun des autres ensembles. Le premier ensemble 420, 421, 422 comprend par exemple des bobines sous-dimensionnées par rapport aux bobines des deux autres ensembles 430, 431, 432 et 440, 441, 442 ; le premier ensemble est alors surtout adapté en cas de vents faibles. Le troisième ensemble 440, 441, 442 comprend par exemple des bobines surdimensionnées par rapport aux bobines des deux autres ensembles 420, 421, 422 et 430, 431, 432 ; le troisième ensemble 440, 441, 442 est alors surtout adapté en cas de vents forts à très forts contrôlés (par exemple par des systèmes de sécurité mécaniques à « clapets » prévus en amont de l'hélice 31). Le premier ensemble 420, 421, 422, voire le deuxième ensemble 430, 431, 432, peut éventuellement ne pas supporter de tels vents forts à très forts même contrôlés, sans que cela n'occasionne des dégradations dues à une surcharge. Pour autant, le premier ensemble 420, 421, 422, voire le deuxième ensemble 430, 431, 432, est nécessaire pour commencer à produire de l'électricité à des vents faibles à modérés et permet de diminuer au maximum le couple électromagnétique de démarrage.

En outre, le premier régulateur électronique 7 peut être configuré pour successivement embrayer et débrayer tout ou partie de chaque ensemble de paires 420, 421, 422, 430, 431, 432, 440, 441, 442 de bobines en fonction d'un paramètre relatif à l'énergie éolienne à convertir, par exemple en fonction de la vitesse de rotation de l'éolienne 3. Le premier régulateur électronique 7 peut donc être propre à gérer l'embrayage et le débrayage de tout ou partie de chaque ensemble en fonction des allures différentes de vents. En outre, l'alimentation en énergie électrique des bobines primaires d'un ensemble peut être assurée, de façon contrôlée par le premier régulateur électronique 7, en ponctionnant l'énergie électrique générée au niveau des bobines secondaires d'un autre ensemble, plutôt qu'en utilisant la source d'énergie électrique 5.

De tels ensembles de dimensionnement croissant permettent à l'aérogénérateur 1 selon le premier aspect de l'invention d'élargir et d'optimiser le champ de génération de puissance des vents faibles à très faibles jusqu'aux vents forts à très forts, en sécurisant à chaque instant les bobines d'une éventuelle surcharge et en conséquence en évitant les dégradations et les maintenances. Précisons que sur le rotor 41, les éléments 411 ancrés sur le support circulaire 412 fixé en bout des pales 311 ont un usage universel pour chaque ensemble de paires de bobines.

En référence à la figure 4, la structure fixe 2 peut comprendre un carénage 21 de l'hélice 31. Le carénage 21 peut prendre la forme d'un diffuseur. Le stator 42 est le cas échéant fixé au carénage 21 de la structure fixe 2. A comparer aux hélices non carénées, une telle hélice 31 carénée permet, en plus de constituer un élément de sécurité, d'augmenter le rendement de l'aérogénérateur 1, en particulier lorsque le carénage 21 prend la forme d'un diffuseur. La structure fixe 2 telle qu'illustrée sur la figure 4 est celle d'une tour éolienne selon le troisième aspect de l'invention. Cependant, la structure fixe 2 n'est pas limitée à celle d'une tour éolienne ; elle peut par exemple comprendre un mât d'éolienne, ancré au sol ou reposant sur une structure flottante (pour les éoliennes off-shore). Dans ce cas, le carénage 21 peut prendre la forme d'un diffuseur sensiblement annulaire ne prolongeant pas, notamment de façon sensiblement continue, la structure fixe 2. En ce sens également, le carénage 21 et le stator 42 peuvent être fixés indépendamment l'un de l'autre à la structure fixe 2.

Toujours en référence à la figure 4, l'aérogénérateur 1 selon l'un ou l'autre de ses modes de réalisation peut comprendre en outre au moins un hauban 33, et de préférence autant de haubans 33 que l'hélice 31 comporte de pales 311. Chaque hauban 33 est configuré entre l'axe 32 de l'éolienne 3 et une pale 311 de l'hélice 31 pour la maintenir dans une position sensiblement perpendiculaire à l'axe 32 de l'éolienne 3. Chaque hauban 33 peut plus particulièrement être ancré entre environ les 2/3 extérieurs de chaque pale 311 et l'axe 32 de l'éolienne 3, en formant un angle avec l'axe 32 de l'éolienne 3 compris entre 20 et 75°. Les haubans 33 permettent de rigidifier, alléger l'ensemble « éolienne 3 / rotor 42 » et d'éviter le phénomène de « flèche » qui pourrait nuire à la continuité du champ magnétique avec les bobines 420a, 420b du stator 42.

L'aérogénérateur 1 selon le premier aspect de l'invention est ainsi simple et facile à mettre en oeuvre. Son coût de revient est faible en comparaison avec celui d'un ensemble aérogénérateur/multiplicateur existant. Les performances de cet aérogénérateur 1 permettent d'envisager l'installation de microcentrales, soit raccordées au réseau-monopole, soit en concept centrales-autonomes (avec batteries) pour distribuer de l'énergie électrique à un nombre limité d'habitations. En outre, cet aérogénérateur 1 peut éventuellement être adapté sur les éoliennes à pales existantes, soit à axe vertical, soit à axe horizontal.

La source d'énergie électrique 5, le premier régulateur électronique 7, le second régulateur électronique 8, le régulateur inverseur de sens 10, le premier redresseur 11 et le second redresseur 12 peuvent être intégré dans une armoire de gestion électronique alimentée le cas échéant par la source d'énergie électrique 5 elle-même.

L'aérogénérateur 1 selon le premier aspect de l'invention est apte et destiné à être intégré à une large variété de tour éolienne 0, et en particulier intégré à une tour éolienne 0 comprenant, en référence à la figure 4 :
- un dispositif d'admission d'air comprenant au moins une tuyère 22 s'étendant depuis une première extrémité jusqu'à une seconde extrémité, chaque première extrémité étant configurée pour pouvoir capter un flux d'air provenant de l'environnement extérieur au système,
- un dispositif de conversion comprenant au moins :
   ∘ une chambre 23 dans laquelle ladite au moins une tuyère 22 débouche par sa seconde extrémité et
   ∘ un aérogénérateur 1 selon le premier aspect de l'invention, et
- un dispositif d'évacuation d'air provenant du dispositif de conversion vers l'environnement extérieur à la tour éolienne 0.

Ce type de tour éolienne carénée permet d'exploiter, pour les vents en entrée, mais aussi les vents en sortie, le phénomène Venturi en augmentant la vitesse du vent en amont de l'aérogénérateur 1 et par aspiration par diverses dépressions générées en aval de l'aérogénérateur 1. Au cours d'essais, la puissance instantanée constatée se rapproche de la limite de Betz, soit 59 % de la puissance théorique (la formule théorique en référence étant Puissance en Watts = 1/2 x 1,2 x vitesses du vent en m/s au cube x surface éolienne en m²). Cette puissance instantanée constatée est à comparer à celles obtenues avec des éoliennes non carénées qui sont aux alentours d'un rendement de 15 % à 30 % et à celles obtenues avec des éoliennes carénées comportant un diffuseur qui peuvent atteindre 40 %, mais sont rares car difficiles à mettre en oeuvre.

La présente invention n'est pas limitée aux modes de réalisation précédemment décrits mais s'étend à tout mode de réalisation entrant dans la portée des revendications. En particulier, l'aérogénérateur 1 et la tour éolienne 0 pourront avantageusement être adaptés en taille au site d'exploitation, en fonction de la force du vent et des besoins en énergie électrique.

### REFERENCES

0. Tour éolienne
1. Aérogénérateur
2. Structure fixe
   2.1. Carénage
   2.2. Tuyère d'admission d'air
   2.3. Chambre du dispositif de conversion
3. Eolienne
   3.1. Hélice - Pale : 311 ; Moyeu : 312
   3.2. Axe
4. Générateur électrique
   4.1. Rotor - Elément : 411 ; Support annulaire : 412
   4.2. Stator - Bobine primaire : 420a, etc ; Bobine secondaire : 420b, etc.
5. Source d'énergie électrique
6. Réseau de distribution
7. Premier régulateur électronique
8. Second régulateur électronique
9. Capteur
10. Régulateur inverseur de sens
11. Premier redresseur
12. Second redresseur

## Revendications

1. Aérogénérateur (1) comprenant :
- une structure fixe (2),
- une éolienne (3) comprenant une hélice (31) pourvue d'au moins deux pales (311) et un axe (32) s'étendant solidairement depuis un moyeu (312) de l'hélice et monté libre en rotation sur la structure fixe (2), pour convertir l'énergie éolienne en énergie mécanique, et
- un générateur électrique (4) comprenant un rotor (41) solidaire de l'éolienne (3) et un stator (42) solidaire de la structure fixe (2) pour convertir l'énergie mécanique générée par l'éolienne (3) en énergie électrique,
le rotor (41) du générateur électrique (4) est fixé sur l'hélice (31) de sorte à être à distance de l'axe (32) de l'éolienne (3),
le rotor (41) comprend au moins un élément (411) et
le stator (42) comprend au moins une bobine (420a, 420b) fixée sur la structure fixe (2), de sorte que chaque élément (411) passe à proximité de chaque bobine (420a, 420b) à chaque rotation d'un tour complet de l'éolienne (3) autour de son axe (32),
**caractérisé en ce que** :
ledit au moins un élément (411) est à base d'un matériau conducteur, et **en ce que**
ladite au moins une bobine (420a, 420b) comprend au moins une paire (420) de bobines, chaque paire de bobines comprenant :
- une bobine primaire (420a) destinée à être reliée à une source d'énergie électrique (5) de sorte que la bobine primaire (420a) génère un champ magnétique lorsqu'elle est parcourue par un courant électrique fourni par la source d'énergie électrique (5), et
- une bobine secondaire (420b) destinée à être reliée à un réseau de distribution (6) d'énergie électrique de sorte à injecter dans ledit réseau un courant électrique issu de la bobine secondaire (420b) et généré par perturbations du champ magnétique généré par la bobine primaire (420a) du fait des passages des éléments à base de matériau conducteur lorsque le rotor tourne.

2. Aérogénérateur (1) selon la revendication précédente, dans lequel ledit au moins un élément (411) s'étend sensiblement parallèlement à l'axe (32) de l'éolienne (3).

3. Aérogénérateur (1) selon l'une quelconque des deux revendications précédentes, dans lequel le matériau conducteur à base duquel au moins un élément (411) est réalisé comprend un acier doux, de préférence à faible teneur en carbone.

4. Aérogénérateur (1) selon l'une quelconque des trois revendications précédentes, dans lequel chaque élément (411) présente une forme de plaque présentant des dimensions de 10 à 50 mm, de préférence égale à 30 mm, en longueur, de 5 à 20 mm, de préférence égale à 10 mm, en largeur, et de 0,1 à 2 mm, de préférence égale à 0,5 mm, en épaisseur.

5. Aérogénérateur (1) selon l'une quelconque des quatre revendications précédentes, dans lequel le rotor (41) comprend en outre un support annulaire (412) fixé sur au moins une pale (311) de l'hélice (31) de façon concentrique avec le moyeu (312) de l'hélice (31), ledit au moins un élément (411) étant fixé au support annulaire (412).

6. Aérogénérateur (1) selon la revendication précédente, dans lequel l'hélice présente une envergure comprise entre 40 et 100 cm, de préférence égale à 60 cm, et supporte entre 10 et 80, de préférence entre 40 et 50, éléments, les éléments (411) étant par exemple répartis à intervalle régulier sur le support annulaire (412).

7. Aérogénérateur (1) selon l'une quelconque des revendications précédentes, dans lequel le stator (42) comprend un ensemble de trois paires (420, 421, 422) de bobines identiques entre elles qui sont par exemple réparties en une symétrie de rotation par rapport à l'axe (32) de l'éolienne (3).

8. Aérogénérateur (1) selon l'une quelconque des revendications précédentes, dans lequel chaque bobine secondaire (420b, 421b, 422b) est destinée à être reliée au réseau de distribution (6) d'énergie électrique via un contacteur électrique (8) configuré pour s'ouvrir lorsque l'éolienne (3) tourne à une vitesse supérieure à une première valeur seuil.

9. Aérogénérateur (1) selon l'une quelconque des revendications précédentes, comprenant trois paires de bobines primaire et secondaire configurées de sorte l'aérogénérateur produise les trois phases d'un courant triphasé.

10. Aérogénérateur (1) selon l'une quelconque des revendications précédentes, comprenant au moins deux, de préférence trois, ensembles de paires (420, 421, 422, 430, 431, 432, 440, 441, 442) de bobines, chaque ensemble comprenant au moins une paire, de préférence trois paires, de bobines, et chaque bobine secondaire (420b, 421b, 422b ; 430b, 431b, 432b ; 440b, 441b, 442b) d'une paire de bobines d'un ensemble présentant une surface et une section différentes de celles de chaque bobine secondaire de chaque paire de bobines de chacun des autres ensembles.

11. Aérogénérateur (1) selon la revendication précédente, comprenant en outre un premier régulateur électronique (7) configurer pour successivement embrayer et débrayer tout ou partie de chaque ensemble de paires (420, 421, 422, 430, 431, 432, 440, 441, 442) de bobines en fonction d'un paramètre relatif à l'énergie éolienne à convertir, par exemple en fonction de la vitesse de rotation de l'éolienne (3).

12. Aérogénérateur (1) selon l'une quelconque des revendications précédentes, dans lequel la structure fixe (2) comprend un carénage (21) de l'hélice (31) pouvant prendre la forme d'un diffuseur, le stator (42) étant le cas échéant fixé au carénage (21).

13. Aérogénérateur (1) selon l'une quelconque des revendications précédentes, comprenant au moins un hauban (33), chaque hauban (33) étant configuré entre l'axe (32) de l'éolienne (3) et une pale (311) de l'hélice (31) pour la maintenir dans une position sensiblement perpendiculaire à l'axe (32) de l'éolienne (3).

14. Kit comprenant :
- une éolienne (3) comprenant une hélice (31) pourvue d'au moins deux pales (311) et un axe (32) destiné à s'étendre solidairement depuis un moyeu (312) de l'hélice, et
- un générateur électrique (4) comprenant un rotor (41) destiné à être solidarisé avec l'éolienne (3) et un stator (42) pour convertir une énergie mécanique générée par l'éolienne (3) en énergie électrique,
le stator (42) et l'éolienne (3) étant propres et destinés à être solidarisés à une structure fixe (2), l'axe (32) de l'éolienne (3) étant monté libre en rotation sur la structure fixe (2) pour convertir l'énergie éolienne en énergie mécanique,
le rotor (41) du générateur électrique (4) étant destiné à être fixé sur l'hélice (31) de sorte à être à distance de l'axe (32) de l'éolienne (3),
le rotor (41) comprenant au moins un élément (411) à base d'un matériau conducteur et
le stator (42) comprenant au moins une bobine (420a, 420b) fixée sur la structure fixe (2), de sorte que chaque élément (411) passe à proximité de chaque bobine (420a, 420b) à chaque rotation d'un tour complet de l'éolienne (3) autour de son axe (32),
ladite au moins une bobine (420a, 420b) comprenant au moins une paire (420) de bobines, chaque paire de bobines comprenant :
- une bobine primaire (420a) destinée à être reliée à une source d'énergie électrique (5), et
- une bobine secondaire (420b) destinée à être reliée à un réseau de distribution (6) d'énergie électrique,
pour constituer un aérogénérateur (1) selon l'une quelconque des revendications précédentes lorsque le kit est assemblé.

15. Tour éolienne (0) comprenant un aérogénérateur (1) selon l'une quelconque des revendications 1 à 13.

## Patentansprüche

1. Windkraftanlage (1), die Folgendes umfasst:
- eine feste Struktur (2),
- eine Windturbine (3), die ein Flügelrad (31) umfasst, das mit mindestens zwei Blättern (311) und einer Welle (32) ausgestattet ist, die sich einstückig von einer Nabe (312) des Flügelrads erstreckt und frei drehbar an der festen Struktur (2) montiert ist, um Windenergie in mechanische Energie umzuwandeln, und
- einen elektrischen Generator (4), der einen Rotor (41), der fest mit der Windturbine (3) verbunden ist, und einen Stator (42), der fest mit der festen Struktur (2) verbunden ist, umfasst, um die von der Windturbine (3) erzeugte mechanische Energie in elektrische Energie umzuwandeln,
wobei der Rotor (41) des elektrischen Generators (4) derart am Flügelrad (31) befestigt ist, dass er von der Welle (32) der Windturbine (3) beabstandet ist,
der Rotor (41) mindestens ein Element (411) umfasst und der Stator (42) mindestens eine Spule (420a, 420b) umfasst, die an der festen Struktur (2) befestigt ist, so dass jedes Element (411) bei jeder vollständigen Umdrehung der Windturbine (3) um ihre Welle (32) in der Nähe jeder Spule (420a, 420b) vorbeikommt,
**dadurch gekennzeichnet, dass**:
das mindestens eine Element (411) aus einem leitfähigen Material besteht, und dadurch, dass
die mindestens eine Spule (420a, 420b) mindestens ein Spulenpaar (420) umfasst, wobei jedes Spulenpaar Folgendes umfasst:
- eine Primärspule (420a), die dazu bestimmt ist, mit einer elektrischen Energiequelle (5) verbunden zu werden, so dass die Primärspule (420a) ein Magnetfeld erzeugt, wenn ein von der elektrischen Energiequelle (5) gelieferter Strom durch sie fließt, und
- eine Sekundärspule (420b), die dazu bestimmt ist, an ein elektrisches Energieverteilungsnetz (6) angeschlossen zu werden, um in dieses Netz einen Strom einzuspeisen, der von der Sekundärspule (420b) kommt und durch Störungen des Magnetfelds erzeugt wird, das von der Primärspule (420a) aufgrund der Durchgänge der Elemente aus leitfähigem Material erzeugt wird, wenn sich der Rotor dreht.

2. Windkraftanlage (1) nach dem vorhergehenden Anspruch, wobei sich das mindestens eine Element (411) im Wesentlichen parallel zur Welle (32) der Windturbine (3) erstreckt.

3. Windkraftanlage (1) nach einem der beiden vorhergehenden Ansprüche, wobei das leitfähige Material, auf dessen Basis das mindestens eine Element (411) hergestellt ist, einen weichen Stahl, vorzugsweise mit einem niedrigen Kohlenstoffgehalt, umfasst.

4. Windkraftanlage (1) nach einem der drei vorhergehenden Ansprüche, wobei jedes Element (411) die Form einer Platte mit Abmessungen von 10 bis 50 mm, vorzugsweise gleich 30 mm, in der Länge, von 5 bis 20 mm, vorzugsweise gleich 10 mm, in der Breite, und von 0,1 bis 2 mm, vorzugsweise gleich 0,5 mm, in der Dicke aufweist.

5. Windkraftanlage (1) nach einem der vier vorhergehenden Ansprüche, wobei der Rotor (41) ferner einen ringförmigen Träger (412) umfasst, der konzentrisch mit der Nabe (312) des Flügelrads (31) an mindestens einem Blatt (311) der Flügelrads (31) befestigt ist, wobei das mindestens eine Element (411) an dem ringförmigen Träger (412) befestigt ist.

6. Windkraftanlage (1) nach dem vorhergehenden Anspruch, wobei das Flügelrad eine Spannweite zwischen 40 und 100 cm, vorzugsweise gleich 60 cm, aufweist und zwischen 10 und 80, vorzugsweise zwischen 40 und 50, Elemente trägt, wobei die Elemente (411) zum Beispiel in regelmäßigen Abständen auf dem ringförmigen Träger (412) verteilt sind.

7. Windkraftanlage (1) nach einem der vorhergehenden Ansprüche, wobei der Stator (42) einen Satz von drei untereinander identischen Spulenpaaren (420, 421, 422) umfasst, die zum Beispiel in Bezug auf die Welle (32) der Windturbine (3) rotationssymmetrisch verteilt sind relativ.

8. Windkraftanlage (1) nach einem der vorhergehenden Ansprüche, wobei jede Sekundärspule (420b, 421b, 422b) dazu bestimmt ist, über ein elektrisches Schütz (8), das dazu konfiguriert ist, sich zu öffnen, wenn sich die Windturbine (3) mit einer Geschwindigkeit dreht, die größer als ein erster Schwellenwert ist, mit dem elektrischen Energieverteilungsnetz (6) verbunden zu werden.

9. Windkraftanlage (1) nach einem der vorhergehenden Ansprüche, die drei Paare von Primär- und Sekundärspulen umfasst, die derart konfiguriert sind, dass die Windkraftanlage die drei Phasen eines Drehstroms erzeugt.

10. Windkraftanlage (1) nach einem der vorhergehenden Ansprüche, die mindestens zwei, vorzugsweise drei Sätze von Spulenpaaren (420, 421, 422, 430, 431, 432, 440, 441, 442) umfasst, wobei jeder Satz mindestens ein Spulenpaar, vorzugsweise drei Spulenpaare, umfasst und jede Sekundärspule (420b, 421b, 422b; 430b, 431b, 432b; 440b, 441b, 442b) eines Spulenpaars eines Satzes eine Oberfläche und einen Querschnitt aufweist, die sich von denen jeder Sekundärspule jedes Spulenpaars jedes anderen Satzes unterscheiden.

11. Windkraftanlage (1) nach dem vorhergehenden Anspruch, die ferner einen ersten elektronischen Regler (7) umfasst, der dazu konfiguriert ist, alle oder einen Teil jedes Satzes von Spulenpaaren (420, 421, 422, 430, 431, 432, 440, 441, 442) in Abhängigkeit eines Parameters in Bezug auf die umzuwandelnde Windenergie, zum Beispiel in Abhängigkeit von der Drehzahl der Windturbine (3), nacheinander einzurücken und auszurücken.

12. Windkraftanlage (1) nach einem der vorhergehenden Ansprüche, wobei die feste Struktur (2) eine Verkleidung (21) des Flügelrads (31) umfasst, die die Form eines Diffusors annehmen kann, wobei der Stator (42) gegebenenfalls an der Verkleidung (21) befestigt sein.

13. Windkraftanlage (1) nach einem der vorhergehenden Ansprüche, die mindestens eine Abspannvorrichtung (33) umfasst, wobei jede Abspannvorrichtung (33) zwischen der Welle (32) der Windturbine (3) und einem Blatt (311) des Flügelrads (31) ausgebildet ist, um es in einer zur Welle (32) der Windturbine (3) im Wesentlichen senkrechten Position zu halten.

14. Installationssatz, der Folgendes umfasst:
- eine Windturbine (3), die ein Flügelrad (31) umfasst, das mit mindestens zwei Blättern (311) und einer Welle (32) ausgestattet ist, die dazu bestimmt ist, sich einstückig von einer Nabe (312) des Flügelrads zu erstrecken, und
- einen elektrischen Generator (4), der einen Rotor (41), der fest mit der Windturbine (3) verbunden ist, und einen Stator (42) umfasst, um eine von der Windturbine (3) erzeugte mechanische Energie in elektrische Energie umzuwandeln,
wobei der Stator (42) und die Windturbine (3) geeignet und dazu bestimmt sind, fest mit einer festen Struktur (2) verbunden zu werden, wobei die Welle (32) der Windturbine (3) frei drehbar an der festen Struktur (2) montiert ist, um die Windenergie in mechanische Energie umzuwandeln, wobei der Rotor (41) des elektrischen Generators (4) dazu bestimmt ist, derart am Flügelrad (31) befestigt zu werden, dass er von der Welle (32) der Windturbine (3) beabstandet ist,
der Rotor (41) mindestens ein Element (411) auf Basis eines leitfähigen Materials umfasst und
der Stator (42) mindestens eine Spule (420a, 420b) umfasst, die an der festen Struktur (2) befestigt ist, so dass jedes Element (411) bei jeder vollständigen Umdrehung der Windturbine (3) um ihre Welle (32) in der Nähe jeder Spule (420a, 420b) vorbeikommt,
wobei die mindestens eine Spule (420a, 420b) mindestens ein Spulenpaar (420) umfasst, wobei jedes Spulenpaar Folgendes umfasst:
- eine Primärspule (420a), die dazu bestimmt ist, an eine elektrische Energiequelle (5) angeschlossen zu werden, und
- eine Sekundärspule (420b), die dazu bestimmt ist, an ein elektrisches Energieverteilungsnetz (6) angeschlossen zu werden,
um eine Windkraftanlage (1) nach einem der vorhergehenden Ansprüche zu bilden, wenn der Installationssatz zusammengebaut ist.

15. Windturbinenturm (0), der eine Windkraftanlage (1) nach einem der Ansprüche 1 bis 13 umfasst.

## Claims

1. An aerogenerator (1) comprising:
- a fixed structure (2),
- a wind turbine (3) comprising a propeller (31) provided with at least two blades (311) and an axis (32) securely extending from a hub (312) of the propeller and mounted free in rotation on the fixed structure (2), to convert wind energy into mechanical energy, and
- an electric generator (4) comprising a rotor (41) secured to the wind turbine (3) and a stator (42) secured to the fixed structure (2) to convert the mechanical energy generated by the wind turbine (3) into electrical energy, the rotor (41) of the electric generator (4) is fastened on the propeller (31) so as to be at a distance from the axis (32) of the wind turbine (3),
the rotor (41) comprises at least one element (411) and the stator (42) comprises at least one coil (420a, 420b) fastened on the fixed structure (2), such that each element (411) passes proximate to each coil (420a, 420b) at each complete revolution of the wind turbine (3) about its axis (32),
**characterised in that**:
said at least one element (411) is based on a conductive material, and **in that**
said at least one coil (420a, 420b) comprises at least one pair (420) of coils, each pair of coils comprising:
- a primary coil (420a) intended to be connected to an electrical energy source (5) so that the primary coil (420a) generates a magnetic field when it is crossed by an electrical current supplied by the electrical energy source (5), and
- a secondary coil (420b) intended to be connected to an electrical energy distribution network (6) so as to inject into said network an electric current originating from the secondary coil (420b) and generated by disturbances of the field generated by the primary coil (420a) because of the passages of the elements based on a conductive material when the rotor rotates.

2. The aerogenerator (1) according to the preceding claim, wherein said at least one element (411) extends substantially parallel to the axis (32) of the wind turbine (3) .

3. The aerogenerator (1) according to any one of the preceding two claims, wherein the conductive material based on which at least one element (411) is made comprises a mild steel, preferably with a low carbon content.

4. The aerogenerator (1) according to any one of the preceding three claims, wherein each element (411) is in the form of a plate having dimensions from 10 to 50 mm, preferably equal to 30 mm, in length, from 5 to 20 mm, preferably equal to 10 mm, in width, and from 0.1 to 2 mm, preferably equal to 0.5 mm, in thickness.

5. The aerogenerator (1) according to any one of the preceding four claims, wherein the rotor (41) further comprises an annular support (412) fastened on at least one blade (311) of the propeller (31) concentrically with the hub (312) of the propeller (31), said at least one element (411) being fastened to the annular support (412).

6. The aerogenerator (1) according to the preceding claim, wherein the propeller has a wingspan comprised between 40 and 100 cm, preferably equal to 60 cm, and supports between 10 and 80, preferably between 40 and 50, elements, the elements (411) being for example distributed at a regular interval over the annular support (412).

7. The aerogenerator (1) according to any one of the preceding claims, wherein the stator (42) comprises a set of three pairs (420, 421, 422) of coils identical to one another which are for example distributed according to a rotational symmetry with respect to the axis (32) of the wind turbine (3).

8. The aerogenerator (1) according to any one of the preceding claims, wherein each secondary coil (420b, 421b, 422b) is intended to be connected to the electrical energy distribution network (6) via an electrical contactor (8) configured to open when the wind turbine (3) rotates at a speed higher than a first threshold value.

9. The aerogenerator (1) according to any one of the preceding claims, comprising three pairs of primary and secondary coils configured so that the aerogenerator produces the three phases of a three-phase current.

10. The aerogenerator (1) according to any one of the preceding claims, comprising at least two, preferably three, sets of pairs (420, 421, 422, 430, 431, 432, 440, 441, 442) of coils, each set comprising at least one pair, preferably three pairs, of coils, and each secondary coil (420b, 421b, 422b; 430b, 431b, 432b; 440b, 441b, 442b) of a pair of coils of a set having a surface and a section different from those of each secondary coil of each pair of coils of each of the other sets.

11. The aerogenerator (1) according to the preceding claim, further comprising a first electronic regulator (7) configured to successively engage and disengage all or part of each set of pairs (420, 421, 422, 430, 431, 432, 440, 441, 442) of coils according to a parameter relating to the wind energy to be converted, for example according to the rotational speed of the wind turbine (3).

12. The aerogenerator (1) according to any one of the preceding claims, wherein the fixed structure (2) comprises a fairing (21) of the propeller (31) which could be in the form of a diffuser, the stator (42) being, where appropriate, fastened to the fairing (21).

13. The aerogenerator (1) according to any one of the preceding claims, comprising at least one guy-wire (33), each guy-wire (33) being configured between the axis (32) of the wind turbine (3) and a blade (311) of the propeller (31) to hold it in a position substantially perpendicular to the axis (32) of the wind turbine (3).

14. A kit comprising:
- a wind turbine (3) comprising a propeller (31) provided with at least two blades (311) and an axis (32) intended to securely extend from a hub (312) of the propeller, and
- an electric generator (4) comprising a rotor (41) intended to be secured to the wind turbine (3) and a stator (42) to convert the mechanical energy generated by the wind turbine (3) into electrical energy,
the stator (42) and the wind turbine (3) being suited and intended to be secured to a fixed structure (2), the axis (32) of the wind turbine (3) being mounted free in rotation on the fixed structure (2) to convert wind energy into mechanical energy,
the rotor (41) of the electric generator (4) being intended to be fastened on the propeller (31) so as to be at a distance from the axis (32) of the wind turbine (3),
the rotor (41) comprising at least one element (411) based on a conductive material, and
the stator (42) comprising at least one coil (420a, 420b) fastened on the fixed structure (2), so that each element (411) passes proximate to each coil (420a, 420b) at each complete revolution of the wind turbine (3) about its axis (32),
said at least one coil (420a, 420b) comprising at least one pair (420) of coils, each pair of coils comprising:
- a primary coil (420a) intended to be connected to an electrical energy source (5), and
- a secondary coil (420b) intended to be connected to an electrical energy distribution network (6),
to form an aerogenerator (1) according to any one of the preceding claims when the kit is assembled.

15. A wind turbine tower (0) comprising an aerogenerator (1) according to any one of claims 1 to 13.
